# EUROPEAN PATENT APPLICATION

(11) **EP 4 825 770 A1**
(43) Date of publication of application: **21.10.2026**
(21) Application number: 26172056.9
(22) Date of filing: 13.04.2026
(51) Int. Cl.: B65G 49/04, B65G 47/252

(54) **IMMERSION SYSTEM**

(30) Priority: 14.04.2025 JP 2025066362
(71) Applicant: TAIKISHA LTD., Tokyo 160-6129 (JP)
(72) Inventor: HIGUCHI, Akira, Tokyo, 160-6129 (JP); NAKAYAMA, Genji, Tokyo, 160-6129 (JP); NISHIHARA, Shigeyoshi, Tokyo, 160-6129 (JP); LI, Xin, Tianjin (CN); YU, Wei, Tianjin (CN)
(74) Representative: EP&C

(57) **Abstract**

An immersion system (10) including a process liquid tank (12) in which a vehicle body is processed, a conveyor line (14) configured to convey the vehicle body and including a pair of rails and chains respectively travelling through inside the pair of rails, a rotation shaft (16) having a horizontal axis intersecting with a travel direction of the chains, and rotatably supporting the vehicle body, a first guide roller (21A, 21B) that is integrally provided at the rotation shaft and arranged separated in a radial direction from a center of the rotation shaft, a second guide roller (22A, 22B) arranged separated in a radial direction from a center of the rotation shaft at a different angle from a direction in which the first guide roller is present, a V-shaped guide rail configured to guide the first guide roller, impart a moment to the rotation shaft, and rotate the vehicle body, and a retention guide rail configured to guide the second guide roller and to maintain an orientation of the vehicle body.

## Description

### CROSS-REFERENCE TO RELATED APPLICATION

This application is based on and claims priority under 35 USC 119 from Japanese Patent Application No. 2025-066362 filed on April 14, 2025, the disclosure of which is incorporated by reference herein.

### BACKGROUND

### Technical Field

The present disclosure relates to an immersion system.

### Related Art

A conveyor system for workpieces is disclosed in the specification of European Patent No. 3201108. This conveyor system includes a conveyor section, a drive system, and a carriage. The drive system includes a drive unit that causes the carriage to proceed along the conveyor section, and the carriage includes a device for holding the workpieces. A guide unit containing at least two guide elements is allocated to the drive system and the carriage. One of the guide elements is configured as a guide section allocated to the drive system, and another of the guide elements is configured as a guide element allocated to the carriage. The guide section and the guide elements engage with each other at least over a part segment.

At least one of the guide elements is adjustable between at least two operating positions. An adjustment device is provided for adjusting the guide elements between the operating positions, and the adjustment device includes a drive element, a unit to transmit force, and/or a section for guiding the guide elements.

### SUMMARY

However, when processing a vehicle body using a process liquid tank, the example in the above related art is a configuration in which a rotation trajectory of the vehicle body bulges out to the lower side of the process liquid tank when entering the tank and when exiting the tank, requiring the process liquid tank to be deeper so that the vehicle body does not contact the bottom of the process liquid tank. This accordingly results in a larger tank volume.

An object of the present disclosure is to enable a depth of a process liquid tank to be made shallower in an immersion system in which a vehicle body is processed.

An immersion system according to the present disclosure includes a process liquid tank configured to store a process liquid for processing a vehicle body, a conveyor line configured to convey the vehicle body and including a pair of rails and chains respectively travelling through inside the pair of rails, a rotation shaft having a horizontal axis intersecting with a travel direction of the chains, rotatably supported by a connection member between chain links of the respective chains, and rotatably supporting the vehicle body, a first guide roller that is integrally provided at the rotation shaft and arranged separated in a radial direction from a center of the rotation shaft, a second guide roller that is integrally provided at the rotation shaft and arranged separated in a radial direction from the center of the rotation shaft at a different angle from a direction in which the first guide roller is present, a V-shaped guide rail configured to guide the first guide roller in the conveyor line, impart a moment to the rotation shaft, and rotate the vehicle body, and a retention guide rail configured to guide the second guide roller in the conveyor line and to maintain an orientation of the vehicle body. Each of the rails includes a lowering inclined section provided in a vicinity of an entrance to the process liquid tank, which corresponds to a segment at which the vehicle body is lowered, and which is inclined from a high position to a low position, and wherein each of the rails includes a raising inclined section provided in a vicinity of an exit of the process liquid tank, which corresponds to a segment at which the vehicle body is raised, and which is inclined from a low position to a high position.

In this immersion system, the vehicle body is supported by the conveyor line, and the vehicle body is inverted and immersed in the process liquid tank. In the conveyor line, a moment acts on the rotation shaft and the vehicle body is rotated due to the first guide roller being guided by the V-shaped guide rail. The V-shaped guide rail may be thought of as being a type of cam. Moreover, in the conveyor line the orientation of the vehicle body is maintained by the second guide roller being guided by the retention guide rail.

Furthermore, a height difference can be imparted to the movement path of the rotation shaft by the rails of the conveyor line. Specifically, the vehicle body can be immersed in the process liquid tank by the rotation shaft being lowered along the lowering inclined section of the rail. Moreover, the vehicle body can be brought out from the process liquid tank by the rotation shaft being raised along the raising inclined section.

A downward projection amount of the vehicle body can be made smaller due to rotating the vehicle body from the upper position to the lower position, and rotating the vehicle body from the lower position to the upper position, when the height position of the rotation shaft is high on the rail.

The present disclosure accordingly enables a shallower depth of process liquid tank in an immersion system in which a vehicle body is processed.

### BRIEF DESCRIPTION OF THE DRAWINGS

Exemplary embodiments of the present invention will be described in detail based on the following figures, wherein:
Fig. 1 is a perspective view illustrating relevant portions of an immersion system according to the present exemplary embodiment;
Fig. 2 is a cross-section illustrating a conveyor line and peripheral structure thereto;
Fig. 3 is front view illustrating a state in which second guide rollers are being guided by retention guide rails such that a vehicle body is maintained in an upper position;
Fig. 4 is a front view illustrating a vicinity of an entrance to a process liquid tank, and illustrating a state in which the vehicle body has started to rotate due to second guide rollers coming out from retention guide rails and also first guide rollers being guided by V-shaped guide rails;
Fig. 5 is a front view illustrating a state in which the first guide rollers have arrived at bottom portions of the V-shaped guide rails, and the vehicle body has rotated approximately 90° from the upper position;
Fig. 6 is a front view illustrating a state in which a rotation shaft has overtaken the first guide rollers, and the vehicle body has rotated further by the first guide rollers rising along the V-shaped guide rail;
Fig. 7 is a front view illustrating a state in which a vehicle body is being immersed in a process liquid tank while still in the lower position due to the rotation shaft moving along the rails to lower side sections while the first guide rollers have come out from V-shaped guide rails and second guide rollers are being guided by retention guide rails;
Fig. 8 is a front view illustrating a state in which the vehicle body is maintained in the lower position and immersed in the process liquid tank;
Fig. 9 is a front view illustrating a state in which the rotation shaft is positioned at raising inclined sections of the rails with the second guide rollers coming out from the retention guide rail and the first guide rollers being guided by the V-shaped guide rails;
Fig. 10 is a front view illustrating a state in which the first guide rollers have reached bottom portions of the V-shaped guide rails and the vehicle body has been rotated by approximately 90° from the lower position;
Fig. 11 is a front view illustrating a state in which the vehicle body has come out from the process liquid tank and returned to the upper position by the first guide rollers coming out from the V-shaped guide rails and the second guide rollers being guided by the retention guide rails; and
Fig. 12 is a front view illustrating a state in which the vehicle body is being maintained at the upper position due to the second guide rollers being guided by the retention guide rails.

### DETAILED DESCRIPTION

Description follows regarding an embodiment to implement the present disclosure, with reference to the drawings. Configuration elements indicated using the same reference numerals in the drawings are the same or similar configuration elements. Note that sometimes duplicate description and reference numerals are omitted in the exemplary embodiment described below. Moreover, the drawings employed in the following description are all merely schematic, and the dimensional relationships of each element and the proportions and the like of each element illustrated in a drawing do not necessary match actual dimension relationships, proportions, and the like. The dimensional relationships of each element and the proportions and the like of each element between plural drawings also do not necessary match actual dimension relationships, proportions, and the like.

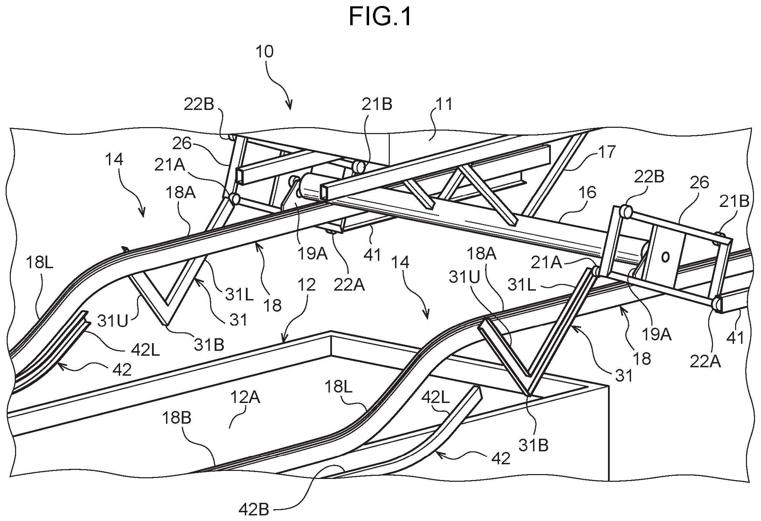

Fig. 1 to Fig. 3 illustrate an immersion system 10 according to the present exemplary embodiment including a process liquid tank 12, a conveyor line 14, a rotation shaft 16, first guide rollers 21A, 21B, second guide rollers 22A, 22B, V-shaped guide rails 31, 32, and retention guide rails 41, 42.

The process liquid tank 12 is a container holding a process liquid 12A for treating a vehicle body 11.

The conveyor line 14 includes a pair of rails 18 and chains 19 travelling through the insides of the respective rails 18, and is equipment for conveying the vehicle body 11. The chains 19 are configured so as to travel through the rails 18 using a non-illustrated drive means.

The rotation shaft 16 is a horizontal shaft intersecting with the chain travel direction, is rotatably supported by connection members 19A between chain links of the respective chains 19, with the vehicle body 11 being rotatable supported thereby. Due to being supported by the rotation shaft 16, the vehicle body 11 is able to rotate between an upper position U, and a lower position L for immersing the vehicle body 11 in the process liquid tank 12.

Specifically, a mounting jig 17 is fixed to the rotation shaft 16, and the vehicle body 11 is fixed to the mounting jig 17. The upper position U is defined as being when the vehicle body 11 is above the rotation shaft 16, and the lower position L is defined as being when the vehicle body 11 is inverted and below the rotation shaft 16.

The rails 18 include, for example, upper side sections 18A, lower side sections 18B, lowering inclined sections 18L, and raising inclined sections 18U, and guide a height position of the rotation shaft 16.

The upper side sections 18A and the lower side sections 18B are respective horizontal sections, with the lower side sections 18B being at positions lower than the upper side sections 18A. Part of the upper side sections 18A, the lowering inclined sections 18L, the lower side sections 18B, and the raising inclined sections 18U are provided at a segment at which the process liquid tank 12 is present. The upper side sections 18A are provided at both the entrance side and exit side of the process liquid tank 12. The vehicle body 11 is in the upper position U when the rotation shaft 16 is positioned at the upper side sections 18A. The vehicle body 11 is in the lower position L when the rotation shaft 16 is positioned at the lower side sections 18B.

The lowering inclined sections 18L of the rails 18 are provided in the vicinity of the entrance to the process liquid tank 12, correspond to a segment at which the vehicle body 11 is lowered, and are locations inclined from a high position (the upper side sections 18A) to a low position (the lower side sections 18B).

The raising inclined sections 18U of the rails 18 are provided in the vicinity of the exit from the process liquid tank 12, correspond to a segment at which the vehicle body 11 is raised, and are locations inclined from a low position (the lower side sections 18B) to a high position (the upper side sections 18A).

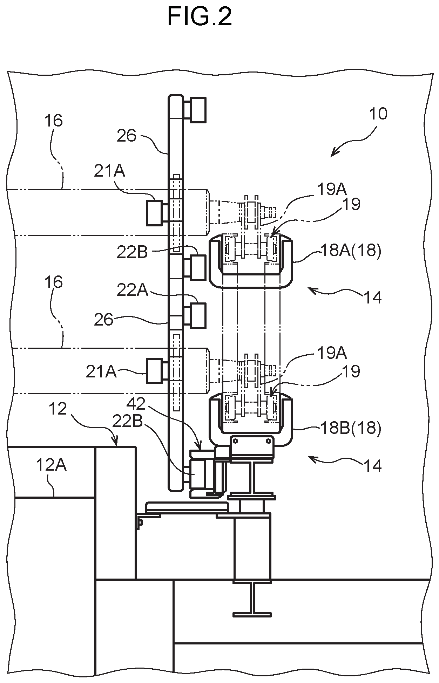

The first guide rollers 21A, 21B are integrally provided at the rotation shaft 16, and are arranged separated in the radial direction from the center of the rotation shaft 16. As illustrated in Fig. 1, a substantially rectangular shaped frame 26 is fixed to each of the two ends of the rotation shaft 16. The first guide rollers 21A, 21B are provided at diagonal positions thereon with the rotation shaft 16 at the center. The first guide rollers 21A, 21B are provided at corner portions at diagonal positions on the frame 26. Moreover, the first guide rollers 21A, 21B face inward from the frame 26, in other words project from the frames 26 toward the lengthwise center of the rotation shaft 16, and are attached to the respective frames 26 at a rotation shaft 16 one end side and other end side. Note that Fig. 2 illustrates two frames 26, a frame 26 when positioned at the upper side sections 18A of the rails 18, and a frame 26 when positioned at the lower side sections 18B.

The second guide rollers 22A, 22B are integrally provided at the rotation shaft 16, and are arranged at different angles to the directions in which the first guide rollers 21A, 21B are present, separated in the radial direction from the center of the rotation shaft 16. The second guide rollers 22A, 22B are provided at diagonal positions with the rotation shaft 16 at the center. The second guide rollers 22A, 22B are provided at corner portions at diagonal positions on the frame 26. The corner portions at which the second guide rollers 22A, 22B are provided are different to the corner portions at which the first guide rollers 21A, 21B are provided. Moreover, the second guide rollers 22A, 22B are attached to the frames 26 at the one end side and the other end side of the rotation shaft 16 so as to project outwards.

The V-shaped guide rails 31, 32 are members in the conveyor line 14 for rotating the vehicle body 11 by imparting momentum to the rotation shaft 16 being guided by the first guide rollers 21A, 21B. The V-shaped guide rails 31 are provided at positions on the upper side sections 18A of the rails 18 in the vicinity of the lowering inclined section 18L. The V-shaped guide rails 32 are provided at positions on the upper side sections 18A of the rails 18 in the vicinity of the raising inclined sections 18U.

The V-shaped guide rails 31, 32 are configured as downwardly projecting V shapes, with lowering inclined sections 31L, 32L and raising inclined sections 31U, 32U respectively connected by bottom portions 31B, 32B. Moreover, the V-shaped guide rails 31, 32 are configured with C-shaped cross-sections opening outward. The first guide rollers 21A, 21B projecting inward from the frame 26 are accordingly able to rotate inside the V-shaped guide rails 31, 32.

The upper end of the lowering inclined sections 31L and the upper end of the raising inclined sections 32U are arranged at the upper side of the respective upper side sections 18A of the rails 18. The upper end of the raising inclined sections 31U and the upper end of the lowering inclined sections 32L are positioned at equivalent heights to the upper side sections 18A of the rails 18. The bottom portions 31B, 32B are positioned at equivalent heights to the lower side sections 18B of the rails 18.

One each of the pairs of first guide rollers, for example the first guide rollers 21A, is guided by the respective V-shaped guide rail 31 when rotating the vehicle body 11 from the upper position U to the lower position L. Each other of the pairs of first guide rollers, for example the first guide rollers 21B, is guided by the respective V-shaped guide rail 32 when rotating the vehicle body 11 from the lower position L to the upper position U. The V-shaped guide rails 31 may also be called first V-shaped guide rails 31. Moreover, the V-shaped guide rails 32 may also be called second V-shaped guide rails 32.

The retention guide rails 41, 42 are members in the conveyor line 14 to guide the second guide rollers 22A, 22B and maintain the orientation of the vehicle body 11. The retention guide rails 41 are arranged so as to be horizontal overall. The end sections on the process liquid tank 12 side of the retention guide rails 41 are positioned above the process liquid tank 12. The retention guide rails 41 may also be called first retention guide rails 41. Moreover, the retention guide rails 42 may also be called second retention guide rails 42.

Horizontal sections 42B that make up most of the retention guide rails 42 are arranged below the lower side sections 18B of the rails 18, for example in the vicinity of an upper edge of the process liquid tank 12. A lowering inclined section 42L and a raising inclined section 42U are provided at the respective two ends of each of the retention guide rails 42. Moreover, the retention guide rails 42 are configured from C-shaped cross-sections opening inward. The second guide rollers 22A, 22B projecting outward from the frames 26 are rotatable at the inside of the retention guide rails 42.

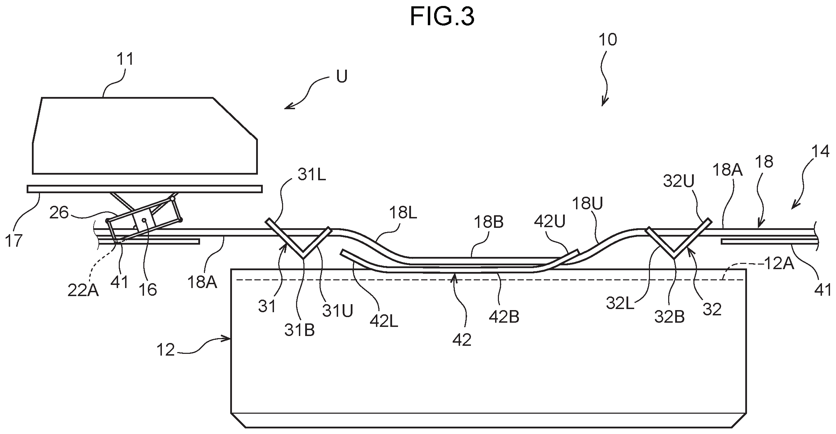

The timing to rotate the vehicle body 11 is defined by placement of the V-shaped guide rails 31, 32 and the retention guide rails 41, 42. As illustrated in Fig. 3, in the present exemplary embodiment, the V-shaped guide rails 31 are provided at positions on the upper side sections 18A in the vicinity of the lowering inclined sections 18L, and the V-shaped guide rails 32 are provided at positions in the vicinity of the raising inclined section 18U. The retention guide rails 41 are provided slightly further to the lower side than the upper side sections 18A. The retention guide rails 42 are mainly provided at positions of the lowering inclined sections 18L and of the lower side sections 18B, with a terminal end at a position overlapping with the raising inclined section 18U.

One each of the pairs of the second guide rollers, for example the second guide rollers 22A, are guided by the retention guide rails 41 such that the vehicle body 11 is maintained in the upper position U. Each other of the pairs of the second guide rollers, for example the second guide rollers 22B, are guided by the retention guide rail 42 such that the vehicle body 11 is maintained in the lower position L.

### Operation

The present exemplary embodiment is configured as described above, and description follows regarding the operation thereof. In the immersion system 10 according to the present exemplary embodiment, the vehicle body 11 illustrated in Fig. 2 and Fig. 3 is supported by the conveyor line 14, and the vehicle body 11 is inverted and immersed in the process liquid tank 12.

In Fig. 3, when the vehicle body 11 is conveyed by the conveyor line 14, the vehicle body 11 is maintained in the upper position U by the second guide rollers 22A being guided by the retention guide rails 41.

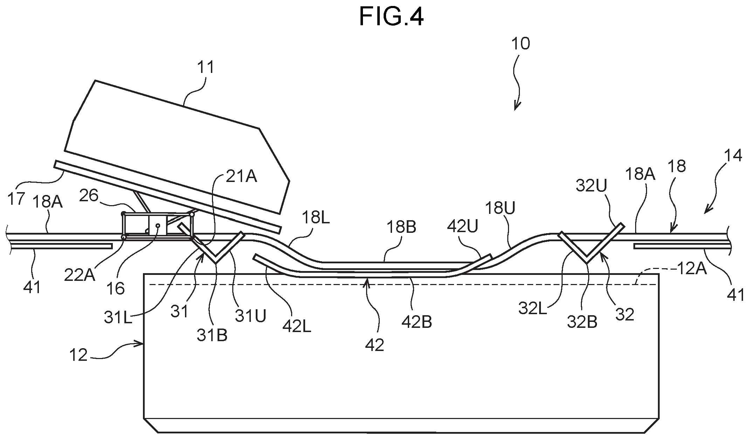

In Fig. 4, when the vehicle body 11 has proceeded as far as the vicinity of the entrance to the process liquid tank 12, the frame 26 and the rotation shaft 16 rotate due to the second guide rollers 22A coming out from the retention guide rails 41 and the first guide rollers 21A being guided by the lowering inclined sections 31L of the V-shaped guide rails 31, and the vehicle body 11 starts to rotate forward.

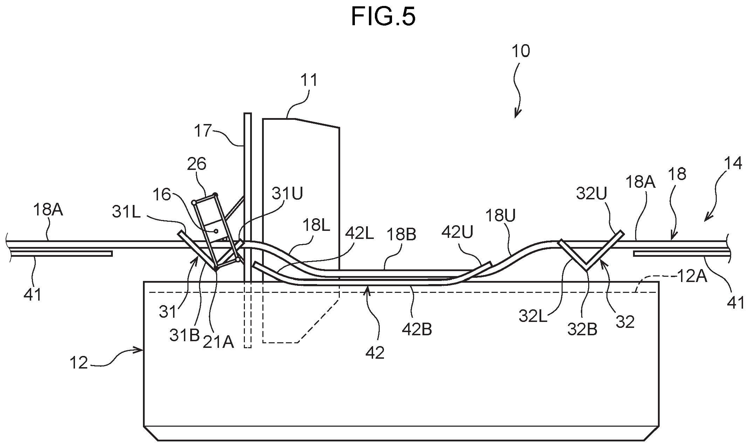

In Fig. 5, the vehicle body 11 adopts a state rotated forward by substantially 90° from the upper position U (Fig. 3) when the first guide rollers 21A have reached as far as the bottom portions 31B of the V-shaped guide rails 31.

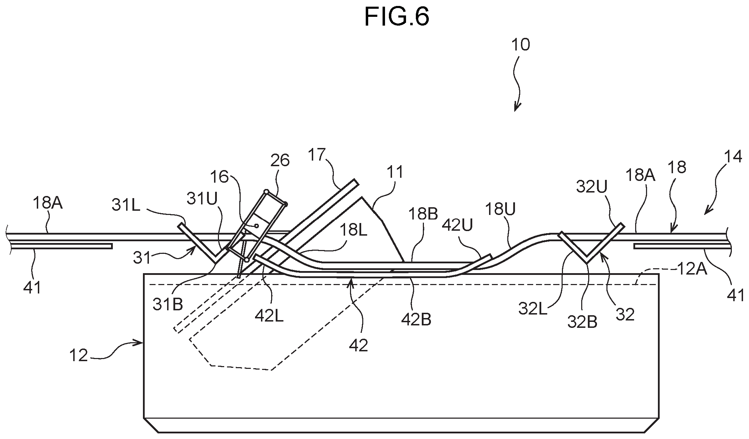

In Fig. 6, the frame 26 and the rotation shaft 16 are rotated by the rotation shaft 16 overtaking and proceeding ahead of the first guide rollers 21A in a state in which the first guide rollers 21A have stopped at the bottom portions 31B of the V-shaped guide rails 31, and by the first guide rollers 21A rising further along the raising inclined sections 31U of the V-shaped guide rails 31, with the vehicle body 11 rotating further forward.

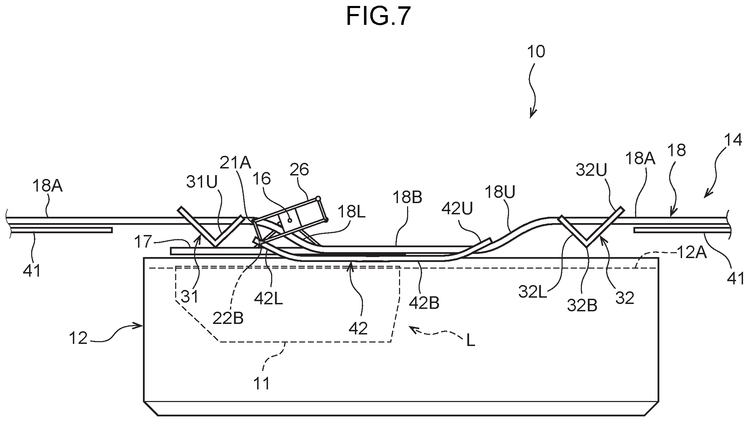

In Fig. 7, the vehicle body 11 proceeds forward while being lowered still in the lower position L and is immersed in the process liquid 12A inside the process liquid tank 12 by the first guide rollers 21A coming out from the raising inclined sections 31U of the V-shaped guide rails 31 and also the second guide rollers 22B being guided by the lowering inclined sections 42L of the retention guide rails 42, and by the rotation shaft 16 being moved further along the lowering inclined sections 18L of the rails 18 to the lower side sections 18B of the rails 18.

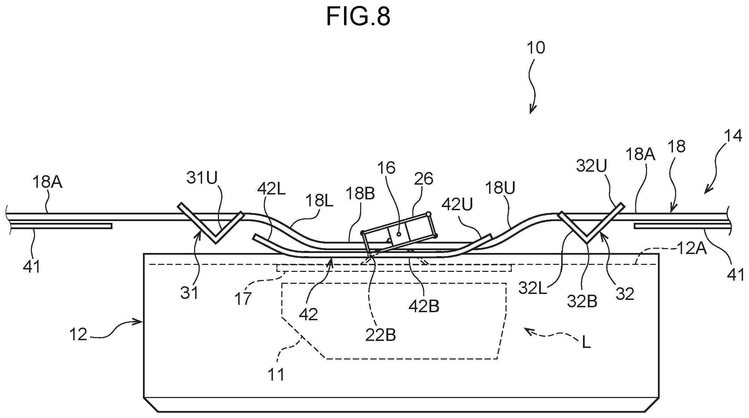

In Fig. 8, the vehicle body 11 is maintained in the lower position L and proceeds in a state immersed in the process liquid 12A in the process liquid tank 12 by the second guide rollers 22B being guided by the horizontal sections 42B of the retention guide rails 42.

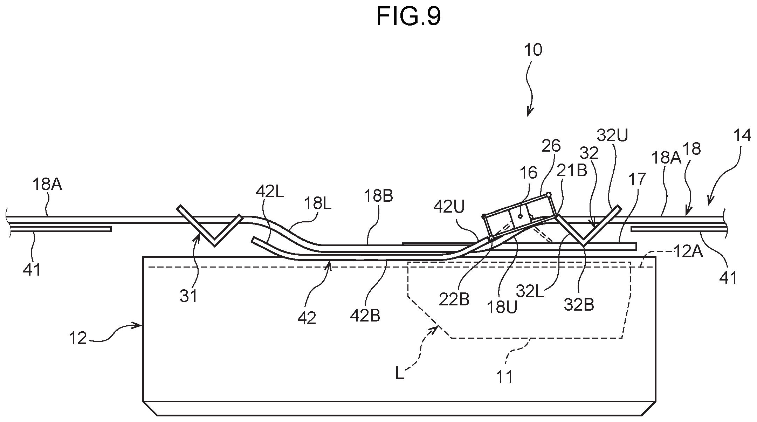

In Fig. 9, the vehicle body 11 proceeds forward while being raised still in the lower position L and starts to come out from the process liquid 12A in the process liquid tank 12 by the second guide rollers 22B being guided by the raising inclined sections 42U of the retention guide rails 42 and the rotation shaft 16 rising along the raising inclined section 18U of the rails 18.

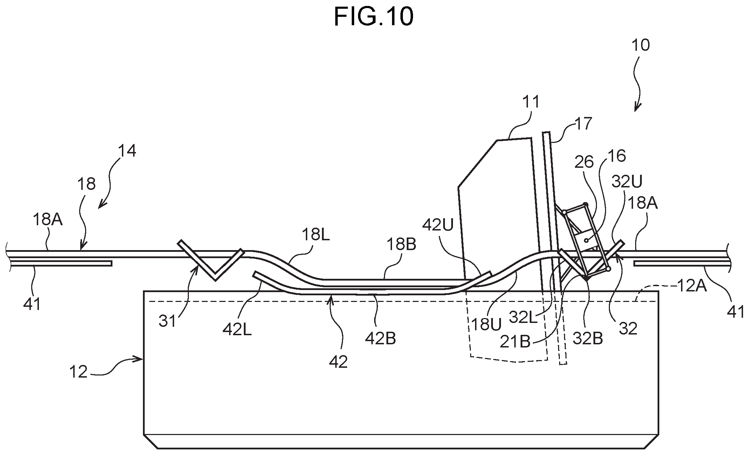

In Fig. 10, the vehicle body 11 adopts a state rotated substantially 90° forward from the lower position L (Fig. 9) when the second guide rollers 22B have come out from the raising inclined sections 42U of the retention guide rails 42, and also when the first guide rollers 21B have been guided by the lowering inclined sections 32L of the V-shaped guide rail 32 and the first guide rollers 21B have reached as far as the bottom portions 32B of the V-shaped guide rails 32.

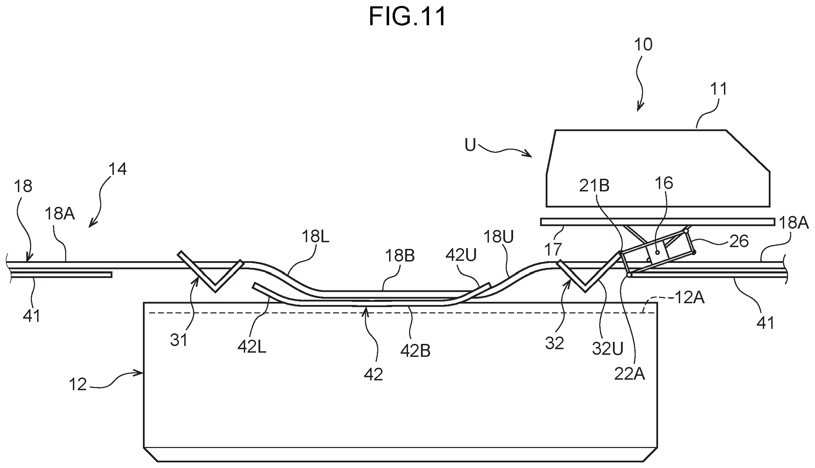

In Fig. 11, the vehicle body 11 comes out from the process liquid tank 12 and returns to the upper position U by the first guide rollers 21B coming out from the V-shaped guide rails 32 and also the second guide rollers 22A being guided by the retention guide rails 41.

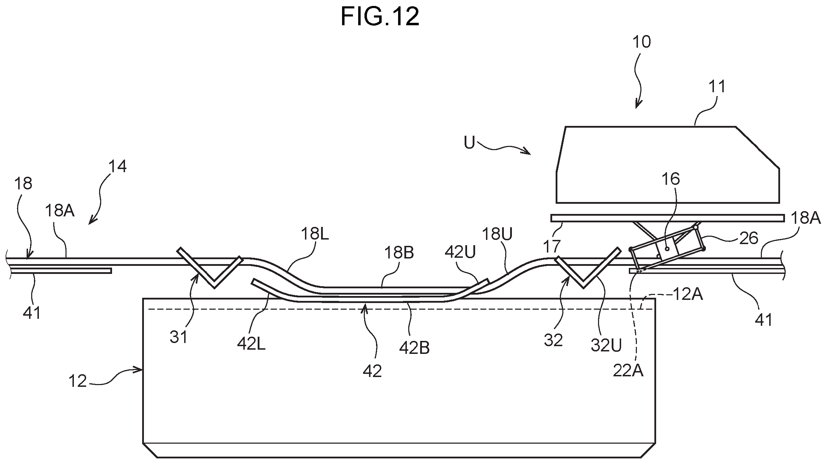

In Fig. 12, the vehicle body 11 proceeds in a state maintained in the upper position U by the second guide rollers 22A being guided by the retention guide rails 41.

In this manner, in the present exemplary embodiment, in the conveyor line 14, a moment acts on the rotation shaft 16 and the vehicle body 11 is rotated due to the first guide rollers 21A being guided by the V-shaped guide rails 31 and also the first guide rollers 21B being guided by the V-shaped guide rails 32. The V-shaped guide rails 31, 32 may be thought of as being a type of cam. Moreover, in the conveyor line 14, the orientation of the vehicle body 11 is maintained due to the second guide rollers 22A being guided by the retention guide rails 41 and the second guide rollers 22B being guided by the retention guide rails 42. This thereby enables swaying during immersion to be suppressed and contact with the tank inside walls and splashing of the process liquid to be prevented.

Furthermore, due to the rails 18 of the conveyor line 14, a height difference can be imparted to the movement path of the rotation shaft 16. Specifically, the vehicle body 11 can be immersed in the process liquid tank 12 by the rotation shaft 16 being lowered along the lowering inclined sections 18L of the rails 18. Moreover, the vehicle body 11 can be brought out from the process liquid tank 12 by the rotation shaft 16 being raised along the raising inclined section 18U of the rails 18.

The downward projection amount of the vehicle body 11 can be made small by the vehicle body 11 being rotated from the upper position U to the lower position L, and the vehicle body 11 being rotated from the lower position L to the upper position U, while the height position of the rotation shaft 16 on the rails 18 is still high. This thereby enables a shallower depth for the process liquid tank 12 in the immersion system 10 in which vehicle body 11 is treated. The depth (volume) of the process liquid tank 12 can accordingly be made smaller, the amount of the process liquid 12A employed can be made small, reducing the processing costs of the vehicle body 11. Moreover, a space saving and a reduction in facility cost can be achieved.

### Other Exemplary Embodiments

Although an example of an exemplary embodiment of the present disclosure has been described above, exemplary embodiments of the present disclosure are not limited to the above, and obviously various other embodiments may be implemented within a range not departing from the spirit of the present disclosure.

## Claims

1. An immersion system, comprising:
a process liquid tank configured to store a process liquid for processing a vehicle body;
a conveyor line configured to convey the vehicle body and including a pair of rails and chains respectively travelling through inside the pair of rails;
a rotation shaft having a horizontal axis intersecting with a travel direction of the chains, rotatably supported by a connection member between chain links of the respective chains, and rotatably supporting the vehicle body;
a first guide roller that is integrally provided at the rotation shaft and separated in a radial direction from a center of the rotation shaft;
a second guide roller that is integrally provided at the rotation shaft and arranged separated in a radial direction from the center of the rotation shaft at a different angle from a direction in which the first guide roller is present;
a V-shaped guide rail configured to guide the first guide roller in the conveyor line, impart a moment to the rotation shaft, and rotate the vehicle body; and
a retention guide rail configured to guide the second guide roller in the conveyor line and to maintain an orientation of the vehicle body,
wherein each of the rails includes a lowering inclined section provided in a vicinity of an entrance to the process liquid tank, which corresponds to a segment at which the vehicle body is lowered, and which is inclined from a high position to a low position, and
wherein each of the rails includes a raising inclined section provided in a vicinity of an exit of the process liquid tank, which corresponds to a segment at which the vehicle body is raised, and which is inclined from a low position to a high position.

2. The immersion system of claim 1, wherein:
the first guide rollers are provided on a diagonal having the rotation shaft at the center;
one of the first guide rollers is guided by the V-shaped guide rail when the vehicle body is rotated from an upper position with the vehicle body above the rotation shaft to a lower position with the vehicle body below the rotation shaft;
another of the first guide rollers is guided by the V-shaped guide rail when the vehicle body is being rotated from the lower position to the upper position;
the second guide rollers are provided on a diagonal having the rotation shaft at the center;
one of the second guide rollers is guided by the retention guide rail when the vehicle body is maintained in the upper position; and
another of the second guide rollers is guided by the retention guide rail when the vehicle body is maintained in the lower position.

3. The immersion system of claim 2, wherein, in the V-shaped guide rail, the lowering inclined section and the raising inclined section are connected together by a bottom portion so as to configure a downwardly projecting V shape.

4. The immersion system of claim 2, wherein:
a substantially rectangular shaped frame is fixed to each of two end portions of the rotation shaft; and
the first guide rollers and the second guide rollers are provided at corner portions of the frame.

5. The immersion system of claim 4, wherein:
the V-shaped guide rail is configured with a C-shaped cross-section opening outward;
the retention guide rail is configured with a C-shaped cross-section opening inward;
the first guide rollers project inward from the frame; and
the second guide rollers project outward from the frame.
